# EUROPÄISCHE PATENTANMELDUNG

(11) **EP 2 789 486 A2**
(43) Veröffentlichungstag der Anmeldung: **15.10.2014**
(21) Anmeldenummer: 14161391.9
(22) Anmeldetag: 25.03.2014
(51) Int. Cl.: B60J 7/22

(54) **Halteeinrichtung für ein Windschott**

(30) Priorität: 09.04.2013 DE 102013103512
(71) Anmelder: Chrom Design GmbH, 53842 Troisdorf (DE)
(72) Erfinder: Paffrath, Ralf, 53842 Troisdorf (DE)
(74) Vertreter: Limbeck, Achim

(57) **Zusammenfassung**

Die vorliegende Erfindung betrifft eine Halteeinrichtung (1) für ein Windschott, welches über den Fondsitzen eines Fahrzeug angeordnet ist, wobei das Windschott aus mindestens einer horizontalen Abdeckung sowie dem eigentlichen Windschutz besteht, der um eine Querachse in eine nach oben gerichtete Wirkstellung schwenkbar ist, wobei zur Arretierung des Windschotts jeweils eine seitliche Halteeinrichtung (1) vorgesehen ist, deren Zapfen (2) oder Zapfen einer Zapfenaufnahme (2) in entsprechende Aufnahmen der seitlichen Innenverkleidungen des Fahrzeugs einführbar ist, wobei der Zapfen (2) oder die Zapfenaufnahme (2) der Halteeinrichtung (1) als ein im Wesentlichen zylindrisch ausgebildetes Formteil ausgestaltet ist, welches innerhalb der Halteeinrichtung (1) federbelastet (3) und axial verschieblich angeordnet ist. Die Halteeinrichtung ist erfindungsgemäß dadurch gekennzeichnet, dass der Zapfen (2) oder die Zapfenaufnahme (2) in eingeführter Position in der Aufnahme mittels einer verschließbaren Verriegelung (3) fixierbar ist, wobei die verschließbare Verriegelung (3) derart ausgestaltet ist, dass der Zapfen oder die Zapfenaufnahme (2) in eingeführter Position in der Aufnahme innerhalb der Halteeinrichtung (1) mittels mindestens eines Verriegelungselements (3a) blockiert bzw. arretiert wird.

## Beschreibung

### Technisches Gebiet

Die vorliegende Erfindung betrifft eine Halteeinrichtung für ein Windschott, welches über den Fondsitzen eines Fahrzeug angeordnet ist, wobei das Windschott aus mindestens einer horizontalen Abdeckung sowie dem eigentlichen Windschutz besteht, der um eine Querachse in eine nach oben gerichtete Wirkstellung schwenkbar ist, wobei zur Arretierung des Windschotts jeweils eine seitliche Halteeinrichtung vorgesehen ist, deren Zapfen in entsprechende Aufnahmen der seitlichen Innenverkleidungen des Fahrzeugs einführbar ist.

### Stand der Technik

Bei herkömmlichen Windschotts, wie sie bspw. aus der EP 1872990 A1 bekannt sind, verrasten die zur Arretierung des Windschotts in den seitlichen Halteeinrichtungen vorgesehenen Zapfen in den Aufnahmen der Innenverkleidungen, wobei zum Lösen dieser Verrastung in den Halteeinrichtungen ein manuell bedienbares Entrastungsmittel vorgesehen sind, welche zur Entrastung des Windschotts zunächst gedrückt und dann üblicherweise entgegen die Einsteckrichtung des jeweiligen Zapfens geschoben werden.

Nun befinden sich die beschriebenen Windschotts im Fondbereich des Fahrzeugs in einer vom Außenbereich des Fahrzeugs gut zugänglichen Position, die es ermöglicht, das Windschott ohne großen technischen Aufwand schnell und einfach zu entrasten und aus dem Fondbereich zu entnehmen. Dieser leichte Zugang bedingt jedoch, dass derartige Windschotts vor Diebstahl nicht hinreichend gesichert sind und oftmals entwendet werden.

### Darstellung der Erfindung

Der vorliegenden Erfindung liegt die Aufgabe zu Grunde, eine Halteeinrichtung für ein Windschott zu schaffen, die die vorgenannten Nachteile beseitigt und gewährleistet, dass das Windschott vor einer unbefugten Entnahme aus dem Fahrzeug gesichert ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Halteeinrichtung sind in den abhängigen Unteransprüchen angegeben.

Die vorliegende Erfindung schließt die technische Lehre ein, dass der Zapfen oder eine Zapfenaufnahme für einen Zapfen der Halteeinrichtung als ein im Wesentlichen zylindrisch ausgebildetes Formteil ausgestaltet ist, welches innerhalb der Halteeinrichtung federbelastet und axial verschieblich angeordnet ist.

Erfindungsgemäß ist eine Halteeinrichtung der eingangs genannten Art dadurch gekennzeichnet, dass der Zapfen oder die Zapfenaufnahme in eingeführter Position in der Aufnahme mittels einer verschließbaren Verriegelung fixierbar ist, wobei die verschließbare Verriegelung derart ausgestaltet ist, dass der Zapfen oder die Zapfenaufnahme in eingeführter Position in der Aufnahme innerhalb der Halteeinrichtung mittels mindestens eines Verriegelungselements blockiert bzw. arretiert wird.

Die Verriegelung bzw. das Verriegelungselement ist erfindungsgemäß verschließbar ausgestaltet, wobei die Verriegelung ein manuelles Schloss, ein Zahlenschloss und/oder auch ein elektronisches Schloss oder andere gemäß dem Stand der Technik bekannte Schlossarten umfasst, um das Verriegelungselement vor unbefugtem Zugriff zu sichern.

In einer besonders vorteilhaften Ausführungsform der Erfindung wird das manuelle Schloss mittels eines in ein an der Halteeinrichtung vorgesehenes Schlüsselloch einführbaren Schlüssels bedient. Der Vorteil der Benutzung eines Schlüssels ist ein hoher Grad an Diebstahlschutz und Zutrittskontrolle.

In der Ausführung als elektronisches Schloss kann dieses vorzugsweise mit der Schließelektronik des Fahrzeugs verbunden sein. Der Vorteil dieser Ausführungsform besteht darin, dass eine automatische Freigabe des Verriegelungselements bei Betätigung der Schließelektronik erfolgt und mithin kein zusätzlicher Schlüssel erforderlich ist. Hierzu ist das Schloss vorteilhaft mit einem kabellosen Funkempfänger ausgestattet, der entweder mit der Schließelektronik verbunden ist oder Signale direkt vom Sender des Handsenders empfängt. Die Stromversorgung des Schlosses kann hierbei über eine in der Halterung integrierte Batterie oder über die Fahrzeugbatterie erfolgen, wobei Strom vorteilhaft über die Aufnahme an der Innenverkleidung des Fahrzeugs über den (in dieser Ausführung stromführenden) Zapfen oder über das an der Aufnahme anliegende (stromführende) Bauteil der Halteeinrichtung erfolgen kann.

In einer weiteren Ausführungsform kann die Verbindung zur Schließelektronik auch funklos erfolgen, wobei Signale der Schließelektronik vorzugsweise über die Aufnahme an der Innenverkleidung des Fahrzeugs über den (in dieser Ausführung signal- und stromleitenden) Zapfen oder über das an der Aufnahme anliegende (signal- und stromleitende) Bauteil der Halteeinrichtung erfolgt.

Zur Freigabe des Zapfens oder der Zapfenaufnahme wird diese/r vorzugsweise mittels eines manuelles Bedienmittels durch den Anwender betätigt, nachdem die Freigabe durch das Verriegelungselement erfolgt ist.

### Kurzbeschreibung der Zeichnungen

Weitere Ziele, Merkmale, Vorteile und Anwendungsmöglichkeiten der erfindungsgemäßen Halteeinrichtung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die erfindungsgemäße Halteeinrichtung in der Seitenansicht, aufgebrochen;
Fign.2a,2b die Halteeinrichtung in perspektivischer Ansicht, schloss- (Fig.2a) und zapfenseitig (Fig.2b).

### Ausführung der Erfindung

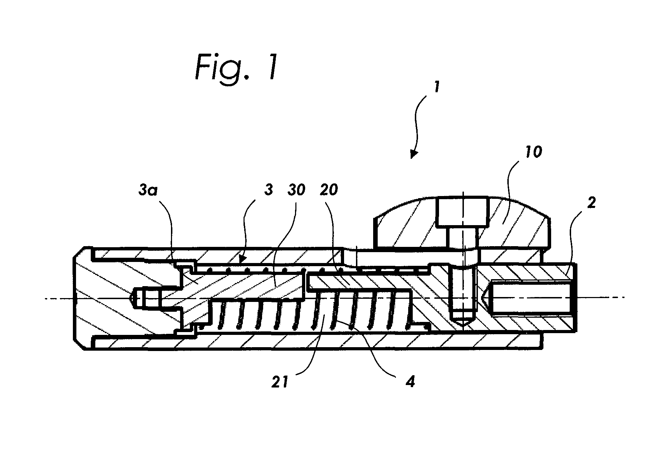

Fig.1 zeigt die erfindungsgemäße Halteeinrichtung 1 in der Seitenansicht, aufgebrochen. Fig.1 zeigt die Halteeinrichtung 1 in eingeführter Position (ohne Schloss).

Wie aus Fig.1 ersichtlich, ist der Zapfen 2 bzw. die Zapfenaufnahme 2 für einen Zapfen in eingeführter Position in der Aufnahme (nicht dargestellt) mittels einer verschließbaren Verriegelung 3 fixierbar. Der Zapfen 2 bzw. die Zapfenaufnahme 2 für einen Zapfen ist in dieser bevorzugten Ausführungsform mittels der Feder 4 federbelastet.

Die Verriegelung 3 umfasst das Verriegelungselement 3a, welches den Zapfen 2 bzw. die Zapfenaufnahme 2 in eingeführter Position in der Aufnahme - wie in Fig.1 dargestellt - innerhalb der Halteeinrichtung 1 blockiert bzw. arretiert.

Besonders bevorzugt weist der Zapfen 2 bzw. die Zapfenaufnahme 2 innenseitig einen länglichen und in Längsrichtung zur Halteeinrichtung 1 ausgerichteten Zapfenfortsatz 20 auf, wobei in der Grundstellung des Zapfens 2 bzw. der Zapfenaufnahme 2 an dem Zapfenfortsatz 20 innerhalb der Halteeinrichtung 1 ein Hohlraum 21 gebildet ist, in den in entrasteter Position des Zapfens 2 bzw. eines Zapfens der Zapfenaufnahme 2 ein an dem Verriegelungselement 3a vorgesehener Verriegelungsfortsatz 30 hineinragt.

Das Verriegelungselement 3a ist innerhalb der Halteeinrichtung 1 vorzugsweise um ca. 90° drehbar gelagert.

Der Verriegelungsfortsatz 30 ist derart ausgestaltet und an dem Verriegelungselement 3a angeordnet und ausgerichtet, dass dieser den Zapfenfortsatz 20 beim Einrasten des Zapfens 2 bzw. eines Zapfens der Zapfenaufnahme 2 in der Aufnahme sowie durch entsprechende Drehung des Verriegelungselements 3a blockiert. In dieser Position kann der Zapfen 2 bzw. die Zapfenaufnahme 2 mithin nicht mehr mit dem vorteilhaft vorgesehenen Bedienmittel 10 aus seiner Einrastung geschoben werden. Durch Drehung des Verriegelungselement 3a vorzugsweise um 90° wird der Zapfenfortsatz 20 wieder freigegeben. Der Zapfen 2 bzw. die Zapfenaufnahme 2 lässt sich nun wieder mittels des Bedienmittels 10 entrasten.

Das Verriegelungselement 3a ist gemäß dieser Ausführungsform der Erfindung in der Weise verschließbar ausgestaltet, dass die Drehung des Verriegelungselement 3a mittels eines manuellen Schlosses (nicht dargestellt) mit Schlüssel erfolgt.

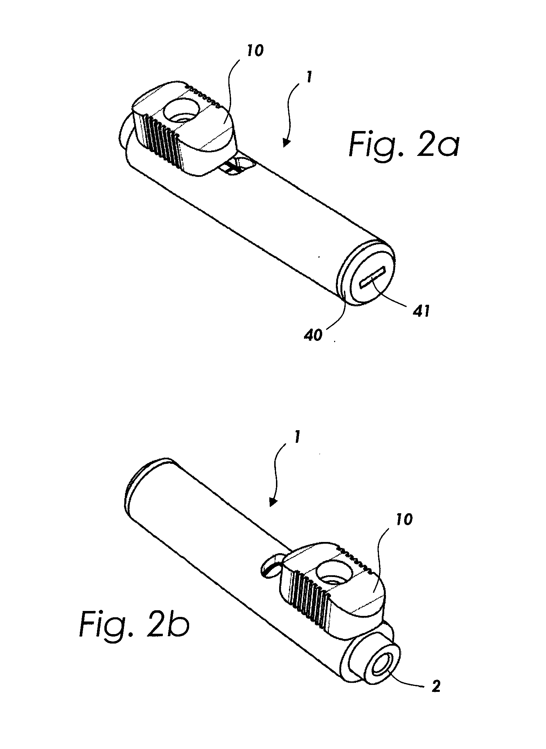

Die Fign.2a,2b zeigen die Halteeinrichtung 1 in perspektivischer Ansicht, schloss- (Fig.2a) und zapfenseitig (Fig.2b). Wie aus Fig.2a ersichtlich, ist das Schloss 40 endseitig und axial an der Halteeinrichtung 1 angeordnet. Das Schloss 40 und mithin das Verriegelungselement 3a werden dabei mittels eines in ein an der Halteeinrichtung 1 vorgesehenes Schlüsselloch 41 einführbaren Schlüssels bedient.

In einer weiteren Ausführungsform der Erfindung kann die vorgenannte Ausführung ebenso mit einem elektronischen Schloss kombiniert werden.

In einer weiteren denkbaren Ausführungsform der Erfindung kann der Zapfen 2 rückseitig ebenso mit Hilfe eines wie auch immer gearteten Blockiermittels, bspw. eines seitlich in die Halteeinrichtung 1 ragenden Stifts oder dergleichen geartete Blockiermittel blockiert oder arretiert werden. Diese Blockiermittel sind in diesen weiteren denkbaren Ausführungsformen der Erfindung jeweils an ein Schloss gekoppelt oder werden über dieses Schloss unmittelbar betätigt.

Die erfindungsgemäße Halteeinrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Halteeinrichtung
- 2: Zapfen bzw. Zapfenaufnahme
- 3: Verriegelung
- 3a: Verriegelungselement
- 4: Feder
- 10: Bedienmittel
- 20: Zapfenfortsatz
- 21: Hohlraum am Zapfenfortsatz innerhalb der Halteeinrichtung
- 30: Verriegelungsfortsatz
- 40: Schloss
- 41: Schlüsselloch

## Patentansprüche

1. Halteeinrichtung (1) für ein Windschott, welches über den Fondsitzen eines Fahrzeug angeordnet ist, wobei das Windschott aus mindestens einer horizontalen Abdeckung sowie dem eigentlichen Windschutz besteht, der um eine Querachse in eine nach oben gerichtete Wirkstellung schwenkbar ist, wobei zur Arretierung des Windschotts jeweils eine seitliche Halteeinrichtung (1) vorgesehen ist, deren Zapfen (2) oder Zapfen einer Zapfenaufnahme (2) in entsprechende Aufnahmen der seitlichen Innenverkleidungen des Fahrzeugs einführbar ist, wobei der Zapfen (2) oder die Zapfenaufnahme (2) der Halteeinrichtung (1) als ein im Wesentlichen zylindrisch ausgebildetes Formteil ausgestaltet ist, welches innerhalb der Halteeinrichtung (1) federbelastet (3) und axial verschieblich angeordnet ist,
**dadurch gekennzeichnet,**
**dass** der Zapfen (2) oder die Zapfenaufnahme (2) in eingeführter Position in der Aufnahme mittels einer verschließbaren Verriegelung (3) fixierbar ist, wobei die verschließbare Verriegelung (3) derart ausgestaltet ist, dass der Zapfen oder die Zapfenaufnahme (2) in eingeführter Position in der Aufnahme innerhalb der Halteeinrichtung (1) mittels mindestens eines Verriegelungselements (3a) blockiert bzw. arretiert wird.

2. Halteeinrichtung nach Anspruch 1,
**dadurch gekennzeichnet,**
**dass** die Verriegelung (3) ein manuelles Schloss, ein Zahlenschloss und/oder ein elektronisches Schloss umfasst.

3. Halteeinrichtung nach Anspruch 2,
**dadurch gekennzeichnet,**
**dass** das elektronische Schloss mit der Schließelektronik des Fahrzeugs und/oder einen Empfänger für einen Handsender aufweist.

4. Halteeinrichtung nach einem der vorangegangenen Ansprüche, **dadurch gekennzeichnet,**
**dass** der Zapfen (2) oder die Zapfenaufnahme (2) innenseitig einen länglichen und in Längsrichtung zur Halteeinrichtung (1) ausgerichteten Zapfenfortsatz (20 aufweist, wobei an dem Fortsatz (20) innerhalb der Halteeinrichtung (1) ein Hohlraum (21) gebildet ist, in den in entrasteter Position des Zapfens (2) oder des Zapfens der Zapfenaufnahme (2) ein an dem Verriegelungselement (3a) vorgesehener Verriegelungsfortsatz (30) hineinragt, wobei das Verriegelungselement (3a) innerhalb der Halteeinrichtung (1) drehbar gelagert ist und der Verriegelungsfortsatz (30) derart ausgestaltet und an dem Verriegelungselement (3a) angeordnet und ausgerichtet ist, dass dieser den Zapfenfortsatz (20) beim Einrasten des Zapfens (2) oder des Zapfens der Zapfenaufnahme (2) in der Aufnahme sowie durch entsprechende Drehung des Verriegelungselements (3a) blockiert.

5. Halteeinrichtung nach Anspruch 4, **dadurch gekennzeichnet, dass** das Verriegelungselement (3a) in der Weise verschließbar ausgestaltet ist, dass eine Drehung des Verriegelungselement (3a) mittels eines manuellen Schlosses mit Schlüssel oder mittels eines elektronischen Schlosses erfolgt.

6. Halteeinrichtung nach einem der vorangegangenen Ansprüche, **dadurch gekennzeichnet, dass** der Zapfen (2) oder die Zapfenaufnahme (2) rückseitig mit Hilfe eines wie auch immer gearteten Blockiermittels blockiert und/oder arretiert wird, wobei das Blockiermittel jeweils an ein Schloss gekoppelt ist oder über dieses Schloss unmittelbar betätigt wird.
